# EUROPÄISCHE PATENTSCHRIFT

(11) **EP 3 228 827 B1**
(45) Veröffentlichungstag und Bekanntmachung des Hinweises auf die Patenterteilung: **03.03.2021**
(21) Anmeldenummer: 16163782.2
(22) Anmeldetag: 05.04.2016
(51) Int. Cl.: F01D 11/00, F01D 11/12

(54) **DICHTUNGSTRÄGER FÜR EINE TURBOMASCHINE, ZUGEHÖRIGE GASTURBINE UND HERSTELLUNGSVERFAHREN**
SEAL CARRIER FOR A TURBOMACHINE, CORRESPONDING GAS TURBINE ENGINE AND METHOD OF MANUFACTURING
SUPPORT DE JOINT D'ÉTANCHÉITÉ POUR UNE TURBOMACHINE, MOTEUR À TURBINE À GAZ ET PROCÉDÉ DE FABRICATION ASSOCIÉ

(43) Veröffentlichungstag der Anmeldung: 11.10.2017
(73) Patentinhaber: MTU Aero Engines AG, 80995 München (DE)
(72) Erfinder: Klötzer, Alexander, 82256 Fürstenfeldbruck (DE)

(56) Entgegenhaltungen:
- WO-A1-2013/162946
- WO-A2-2014/031196
- DE-A1-102012 201 050
- US-A- 4 295 785
- US-A1- 2014 020 403
- US-A1- 2015 292 347

## Beschreibung

Die vorliegende Erfindung betrifft einen Dichtungsträger für eine Turbomaschine, insbesondere eine Industriegasturbine oder Fluggasturbine, umfassend eine Trägerbasis und wenigstens einen Dichtungskörper, wobei der wenigstens eine Dichtungskörper mit der Trägerbasis verbunden ist und wobei der wenigstens eine Dichtungskörper durch mehrere in Umfangsrichtung und in Axialrichtung nebeneinander, insbesondere regelmäßig angeordnete Hohlräume gebildet ist, wobei sich die Hohlräume von der Trägerbasis aus in radialer Richtung erstrecken.

Richtungsangaben wie "Axial-" bzw. "axial", "Radial-" bzw. "radial" und "Umfangs-" sind grundsätzlich auf die Maschinenachse der Turbomaschine bzw. Gasturbine bezogen zu verstehen, sofern sich aus dem Kontext nicht explizit oder implizit etwas anderes ergibt.

Derartige Dichtungsträger mit wabenförmigem Dichtungskörper sind bekannt. Üblicherweise werden die wabenförmigen Dichtungskörper auf die Trägerbasis aufgelötet. Der Dichtungsträger weist insbesondere in Umfangsrichtung eine geringe Steifigkeit auf, die durch den wabenförmigen Dichtungskörper kaum verbessert wird, da die Waben selbst in Umfangsrichtung keine besondere Steifigkeit aufweisen. Da der Dichtungsträger samt Dichtungskörper in radialer Richtung möglichst flach ausgebildet sein soll, ergibt sich für das gesamte Bauteil eine geringe Steifigkeit In der DE 10 2012 201 050 A1 wird ein anderes Beispiel einer Dichtungsanordnung für eine Strömungsmaschine zur Abdichtung eines Radialspaltes zwischen einem Rotor und einem Stator offenbart. Die Anordnung umfasst eine Vielzahl von Dichtsegmenten, die jeweils einen Grundkörper mit einem Wabendichtungselement aufweisen, wobei die Dichtsegmente durch ein generatives Verfahren integral bzw. einstücking hergestellt sind.

Aufgabe der Erfindung ist es, einen Dichtungsträger bereitzustellen, der die obigen Nachteile verringert oder gar vermeidet.

Zur Lösung dieser Aufgabe wird ein Dichtungsträger gemäß Anspruch 1 vorgeschlagen. Dabei wird an der Trägerbasis wenigstens ein entlang der Umfangsrichtung verlaufendes Versteifungselement vorgesehen, das den wenigstens einen Dichtungskörper an einem seiner axialen Endbereiche wenigstens teilweise abdeckt. Die teilweise Abdeckung eines axialen Endbereichs führt zu einem Versteifungselement, das sich in Umfangsrichtung und in Radialrichtung erstreckt. Es steht somit in radialer Richtung von der Trägerbasis ab, so dass es eine Art umlaufende Rippe bildet. Das Vorsehen eines solchen rippenartigen Versteifungselements erhöht die Steifigkeit des Dichtungsträgers insbesondere in Umfangsrichtung. Bei einer erhöhten Steifigkeit des Dichtungsträgers kann beispielsweise auch ein Laufspalt verringert werden, der zwischen dem Dichtungskörper und einem gegenüberliegenden Dichtungsvorsprung einer Rotorkomponente ausgebildet ist, weil die verbesserte Steifigkeit das Einhalten von geringen Toleranzen unterstützt. Durch das wenigstens teilweise Abdecken des Dichtungskörpers wird dieser vor Beschädigung beim Einbau geschützt. Dieser Schutz ist dann besonderes gut, wenn das Versteifungselement in radialer Richtung so dimensioniert ist, dass es den Dichtungskörper vollständig abdeckt.

Weiterbildend wird vorgeschlagen, dass an der Trägerbasis an ihren beiden axialen Endabschnitten jeweils ein Versteifungselement vorgesehen ist, derart dass der wenigstens eine Dichtungskörper in Axialrichtung zwischen den beiden Versteifungselementen aufgenommen ist. Hierdurch weist der Dichtungsträger an seinen beiden axialen Enden jeweils ein Versteifungselement auf, so dass ein dazwischen aufgenommener Dichtungskörper noch besser geschützt ist gegen Beschädigung. Ferner führt das Vorsehen eines zweiten Versteifungselements zu einer weiter verbesserten Steifigkeit des Dichtungsträgers.

Es ist bevorzugt, dass die Hohlräume des wenigstens einen Dichtungskörpers durch untereinander verbundene Streben gebildet sind, wobei die Streben derart angeordnet sind, dass die Hohlräume in einer Draufsicht in Radialrichtung eine vieleckige Form aufweisen, insbesondere rautenförmig ausgebildet sind. Durch eine rautenförmige Anordnung der Streben wird eine insbesondere in Umfangsrichtung verbesserte Steifigkeit erreicht verglichen mit einer wabenförmigen Ausgestaltung. Insbesondere wirken die bei einem Rautenmuster vorhandenen Kreuzungsbereiche von jeweils zwei Streben besonderes stabilisierend.

Weiterbildend wird vorgeschlagen, dass an der Trägerbasis zwei Dichtungskörper angeordnet sind, die ein Axialrichtung nebeneinander angeordnet sind, wobei jeder Dichtungskörper an seinem vom benachbarten Dichtungskörper abgewandten axialen Endbereich durch ein jeweiliges Versteifungselement abgedeckt ist. Das Vorsehen von zwei Dichtungskörpern ermöglicht eine bessere Abdichtung von drehenden und stehenden Komponenten einer Turbomaschine, insbesondere Gasturbine zueinander. Durch das Bereitstellen eines Versteifungselements an jedem axialen Ende der Trägerbasis und das wenigstens teilweise Abdecken der beiden Dichtungskörper an ihrer axialen Außenseite, wird eine erhöhte Steifigkeit des Dichtungsträgers erreicht und die Gefahr von Beschädigung der Dichtungskörper verringert.

Gemäß der Erfindung ist zwischen den beiden Dichtungskörpern ein weiteres Versteifungselement vorgesehen, derart, dass jeder Dichtungskörper zwischen dem weiteren Versteifungselement und dem jeweiligen Versteifungselement, das den axialen Endabschnitt abdeckt, aufgenommen ist. Gemäß einer solchen Ausführungsform umfasst der Dichtungsträger also drei Versteifungselemente, von denen zwei an den axialen Enden und eines im Wesentlichen axial mittig angeordnet sind, wobei die Dichtungskörper zwischen dem mittleren Versteifungselement und einem jeweiligen axial außen angeordneten Versteifungselement aufgenommen sind. Auch diese Maßnahme erhöht die Steifigkeit des Dichtungsträgers. Es ist weiter denkbar, dass auch vier oder mehr Versteifungselemente vorgesehen. Dabei könnten beispielsweise die in Axialrichtung außen liegenden Versteifungselemente den jeweiligen Dichtungskörper vollständig abdecken und axial dazwischen liegende Versteifungselemente könnten eine geringere radiale Ausdehnung haben, beispielsweise die Hälfte der radialen Dimension der Dichtungskörper, so dass diese kleinere Versteifungselemente in die Dichtungskörper aufgenommen und von radial innen nicht sichtbar sind.

Weiter sind, gemäß der Erfindung, die Trägerbasis, der wenigstens eine Dichtungskörper und das wenigstens eine Versteifungselement einstückig ausgebildet

Dabei sind die Trägerbasis, der wenigstens eine Dichtungskörper und das wenigstens eine Versteifungselement durch ein additives Fertigungsverfahren hergestellt, insbesondere durch selektives Laserschmelzen. Hierbei ist es bevorzugt, dass die Trägerbasis, der wenigstens eine Dichtungskörper und das wenigstens eine Versteifungselement schichtweise aufgebaut sind, wobei die Schichten in Axialrichtung nebeneinander liegen.

Weiterbildend wird vorgeschlagen, dass die in Axialrichtung beim schichtweisen Herstellen obersten Hohlräume des Dichtungskörpers wenigstens teilweise gefüllt sind, derart, dass das in Axialrichtung anschließende, den Dichtungskörper abdeckende Versteifungselement mit den wenigstens teilweise gefüllten Hohlräumen verbunden ist. Dabei dient das wenigstens teilweise Füllen der obersten Hohlräume dazu, die Verbindung zum abschließenden Versteifungselement herzustellen. Ferner ist das teilweise Auffüllen der Hohlräume durch das schichtweise Aufbauen bedingt.

Der Dichtungsträger kann eine geschlossene Ringform aufweisen oder als Ringsektor ausgeführt sein. Ist der Dichtungsträger als Ringsektor ausgeführt, kann durch mehrere Dichtungsträger eine Ringform zusammengesetzt werden, wobei die ringsektorförmigen Dichtungsträger in Umfangsrichtung nebeneinander angeordnet und vorzugsweise miteinander verbunden werden.

Ferner kann an der Trägerbasis auf deren von dem wenigstens einen Dichtungskörper abgewandten Seite eine Haltestruktur ausgebildet sein, die dazu eingerichtet ist, den Dichtungsträger mit einem anderen Bauteil einer Turbomaschine bzw. Gasturbine, zu verbinden.

Die Erfindung betrifft ferner auch eine Gasturbine, insbesondere Fluggasturbine mit wenigstens einem oben beschriebenen Dichtungsträger, gemäß Anspruch 11, wobei der wenigstens eine Dichtungsträger einem Leitschaufelkranz zugeordnet ist und wobei der wenigstens eine Dichtungskörper radial innen einem drehenden Rotorbauteil, insbesondere einer Welle oder Scheibe eines Laufschaufelkranzes und daran ausgebildeten Dichtvorsprüngen zugewandt ist.

Schließlich betrifft die Erfindung auch ein additives Verfahren, insbesondere selektives Laserschmelzverfahren, zur Herstellung eines oben beschriebenen Dichtungsträgers, gemäß Anspruch 12. Das Verfahren umfasst die Schritte:
schichtweises Aufbauen eines ersten Versteifungselements;
schichtweises Aufbauen vom miteinander verbundenen, insbesondere sich kreuzenden Streben zur Bildung des Dichtungskörpers mit Hohlräumen;
schichtweises Aufbauen von wenigstens teilweise gefüllten Hohlräumen;
schichtweises Aufbauen eines zweiten Versteifungselements, das sich an die wenigstens teilweise gefüllten Hohlräume anschließt;
wobei bei jedem schichtweisen Aufbauschritt auch die Trägerbasis schichtweise aufgebaut wird und wobei der Schichtaufbau bezogen auf einen bestimmungsgemäß verwendeten Dichtungsträger in Axialrichtung erfolgt, so dass die Trägerbasis , der Dichtkörper und die Versteifungselemente einstückig ausgebildet werden.

Vorzugsweise ist jeweils in Baurichtung des additiven Herstellverfahrens gesehen letzte Reihe von Hohlräumen eines jeweiligen Dichtungskörpers wenigstens teilweise, vorzugsweise vollständig gefüllt, so dass die in Baurichtung des additiven Herstellverfahrens gesehen letzte Reihe von Hohlräumen, die nicht gefüllt sind, eine viereckige Form aufweisen, es aber keine ungefüllten Hohlräume in dieser Reihe gibt, die eine davon abweichende, insbesondere dreieckige Form aufweisen. Auf diese Weise kann erreicht werden, dass sich der erfindungsgemäße Dichtungsträger wie beschrieben auf einfache Weise generativ herstellen lässt, ohne dass während des Bauprozesses eine feste Schicht auf losem Pulver aufgebaut werden müsste. Zudem führen die zumindest teilweise, vorzugsweise vollständig ausgefüllten Hohlräume dazu, dass die Versteifungswirkung des angrenzenden Versteifungselements noch verstärkt wird.

Bei dem Verfahren ist es bevorzugt, dass die Streben derart schichtweise aufgebaut werden, dass sie sich unter einem Winkel von etwa 90° schneiden bzw. mit der Ebene des Schichtaufbaus einen Winkel von etwa 45° bilden. Der Winkel zur Ebene des Schichtaufbaus kann auch größer als 45° sein und bis etwa 80° betragen.

Schließlich kann das Verfahren auch den Schritt umfassen, dass bei jedem schichtweisen Aufbauschritt auch eine mit der Trägerbasis verbundene Haltestruktur schichtweise aufgebaut wird.

Nachfolgend wird die Erfindung unter Bezugnahme auf die anliegenden Figuren beispielhaft und nicht einschränkend beschrieben.
Fig. 1 zeigt in einer vereinfachten schematischen Schnittdarstellung einen Dichtungsträger mit Trägerbasis, zwei Dichtungskörpern, die gegenüber von zwei Dichtungsvorsprüngen (Dichtfins) eines drehenden Bauteils einer Turbomaschine angeordnet sind, und zwei Versteifungselementen.
Fig. 2 zeigt eine vereinfachte schematische Perspektivdarstellung eines Dichtungsträgers mit zwei Dichtungskörpern und drei Versteifungselementen, wobei auf eine radiale Innenseite der Dichtungskörper geblickt wird.
Fig. 3 zeigt einen vereinfachten schematischen Ausschnitt des axialen Endabschnitts des Dichtungskörpers mit durch Streben begrenzten Hohlräumen, etwa entsprechend dem gestrichelten dargestellten Bereich III der Figur 2.
Fig. 4 zeigt vereinfacht und schematisch das Herstellen eines Dichtungsträgers mittels eines additiven Verfahrens, wie etwa selektives Laserschmelzen.
Fig. 5 zeigt vereinfacht und schematisch den bei einem additiven Verfahren hergestellten obersten Teil des Dichtungsträgers, insbesondere ausgefüllte halbe Hohlräume, die mit einem Versteifungselement verbunden sind.

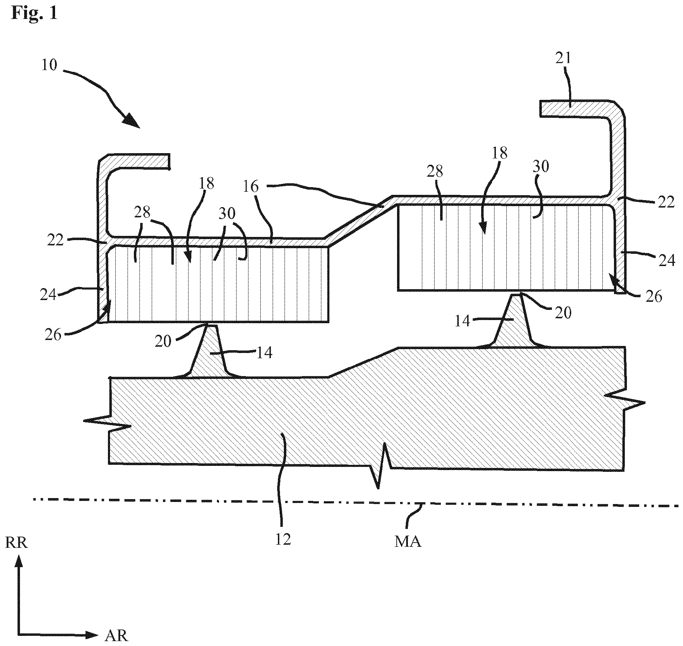

In Fig. 1 ist schematisch und vereinfacht ein Dichtungsträger 10 in einer Schnittdarstellung gezeigt. Strichpunktiert ist eine mögliche Dreh- bzw. Maschinenachse MA einer nicht weiter dargestellten Turbomaschine, insbesondere Industriegasturbine oder Fluggasturbine angedeutet. Die Maschinenachse MA verläuft in Axialrichtung AR. In Radialrichtung RR liegt dem Dichtungsträger 10 radial innen eine hier nur schematisch angedeutete Rotorkomponente 12 gegenüber. Die Rotorkomponente 12 weist Dichtungsvorsprünge 14 auf, die auch als Dichtfins bezeichnet werden können. Die Dichtungsvorsprünge 14 erstrecken sich in Radialrichtung RR zum Dichtungsträger 10 hin. Sowohl der Dichtungsträger 10, als auch die Rotorkomponente 12 erstrecken sich üblicherweise auch in Umfangrichtung um die Maschinenachse MA herum. Dabei können diese in Umfangsrichtung segmentiert ausgebildet sein.

Der Dichtungsträger 10 weist eine Trägerbasis 16 auf. Vorzugsweise ist die Trägerbasis 16 ein geschlossener Ring oder ein Ringsektor, der sich in Umfangsrichtung um die Maschinenachse MA herum erstreckt. An der Trägerbasis 16 ist wenigstens ein Dichtungskörper 18 vorgesehen. Im vorliegenden Ausführungsbeispiel sind zwei Dichtungskörper 18 mit der Trägerbasis 16 verbunden. Jeder Dichtungskörper 18 liegt in Radialrichtung RR gegenüber einem Dichtungsvorsprung 14 (Dichtfin). Zwischen dem Dichtungsvorsprung 14 und dem Dichtungskörper 18 ist ein Laufspalt 20 ausgebildet. Der Laufspalt 20 soll möglichst klein sein, so dass die Dichtwirkung möglichst groß ist. Im Betrieb einer Turbomaschine ergeben sich aufgrund der wirkenden Kräfte und thermischen Verformungen Betriebszustände, in denen die Dichtungsvorsprünge in Kontakt mit den Dichtungskörpern 18 kommen können. Die Dichtungskörper 18 sind dabei als Verschleißteile vorgesehen. Insbesondere sind die Dichtungskörper 18 aus einem weniger widerstandsfähigen Material hergestellt als die Dichtungsvorsprünge 14, so dass beim Kontakt das Material des Dichtungskörpers 18 wesentlich stärker oder sogar ausschließlich abgetragen wird im Vergleich zu dem Material des Dichtungsvorsprungs 14. Ferner ist an der Trägerbasis auch eine Haltestruktur 21 vorgesehen, die hier nur vereinfacht angedeutet ist und dazu dient, den Dichtungsträger 10 an einer zugeordneten Komponente zu befestigen.

Mit der Trägerbasis 16 sind an ihren axialen Endabschnitten 22 Versteifungselemente 24 verbunden. Die Versteifungselemente 24 erstrecken sich in Radialrichtung RR entlang eines jeweiligen axialen Endbereichs 26 des betreffenden Dichtungskörpers 18, so dass der Dichtungskörper 18 durch das Versteifungselement 24 abgedeckt ist. Im vorliegenden Beispiel ist bezogen auf die Radialrichtung RR eine vollständige Abdeckung der Dichtungskörper 18 durch die beiden Versteifungselemente 24 dargestellt. Die Versteifungselemente 24 können einen jeweiligen Dichtungskörper 18 in Radialrichtung allerdings auch nur teilweise abdecken. Das Vorsehen von wenigstens einem Versteifungselement 18 führt zu einer verbesserten Steifigkeit der Trägerbasis 16, insbesondere in Umfangsrichtung. Die Steifigkeit wird durch zwei Versteifungselemente 24 insgesamt weiter verbessert, und die Dichtungskörper 18 sind vor Beschädigung, insbesondere beim Einbau geschützt.

Der Dichtungskörper 18 weist mehrere nebeneinander angeordnete, vorzugsweise regelmäßig angeordnete Hohlräume 28 auf, die durch Streben 30 gebildet werden, was in der Fig. 1 nur sehr vereinfacht angedeutet ist. Die Streben 30 weisen eine Höhenrichtung auf, die im Wesentlichen der Radialrichtung RR entspricht. Die Wandstärke der Streben 30 kann in Radialrichtung konstant sein. Alternativ können die Streben 30 aber auch eine sich zu dem freien, den Dichtvorsprüngen 14 zugewandten Ende hin verjüngende Form und somit eine nicht konstante Wandstärke aufweisen.

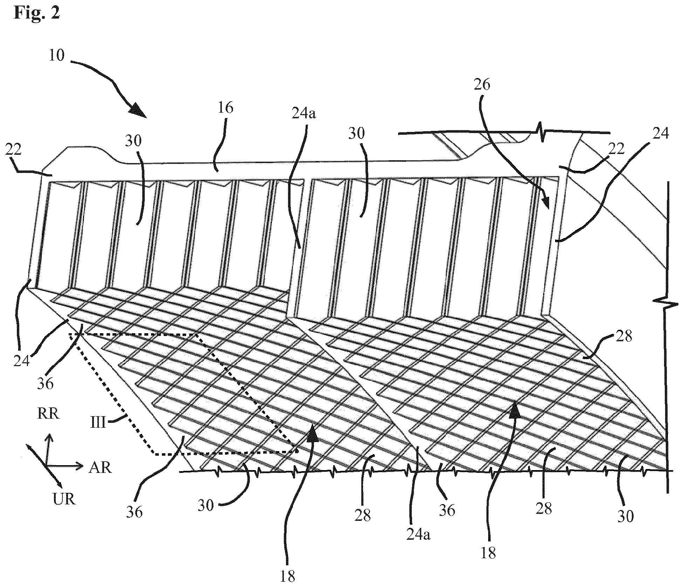

Fig. 2 zeigt eine etwas modifizierte Ausführungsform eines Dichtungsträgers 10 mit zwei Dichtungskörpern 18. Anstelle eines zentralen Bereichs, in dem kein Dichtungskörper vorgesehen ist, wie dies in der Fig. 1 bei dem geneigten Teil der Trägerbasis 16 der Fall ist, sind die beiden Dichtungskörper 18 zueinander angrenzend an der Trägerbasis 16 vorgesehen. Zwischen den beiden Dichtungskörpern 18 ist ein weiteres, drittes Versteifungselement 24a vorgesehen. Die beiden Dichtungskörper 18 sind somit zwischen einem jeweiligen Versteifungselement 24, das an einem axialen Endabschnitt 22 der Trägerbasis 16 vorgesehen ist, und dem dritten Versteifungselement 24a, das vorzugsweise in Axialrichtung AR etwa mittig angeordnet ist, aufgenommen. Um zwischen den Dichtungskörpern 18 einen Niveauunterschied zu erhalten, so dass eine einem Dichtvorsprung 14 (Fig. 1) gegenüberliegende Dichtfläche eines Dichtungskörpers 18 radial weiter innen liegt, als die Dichtfläche des anderen Dichtungskörpers 18, weisen die Dichtungskörper 18 gemäß Ausführungsform der Fig. 2 eine unterschiedliche Höhe in Radialrichtung RR auf. In der Ausführungsform gemäß Fig. 1 wird dies bei etwa gleich hohen Dichtungskörpern 18 durch den geneigt verlaufenden zentralen Teil der Trägerbasis 16 erreicht.

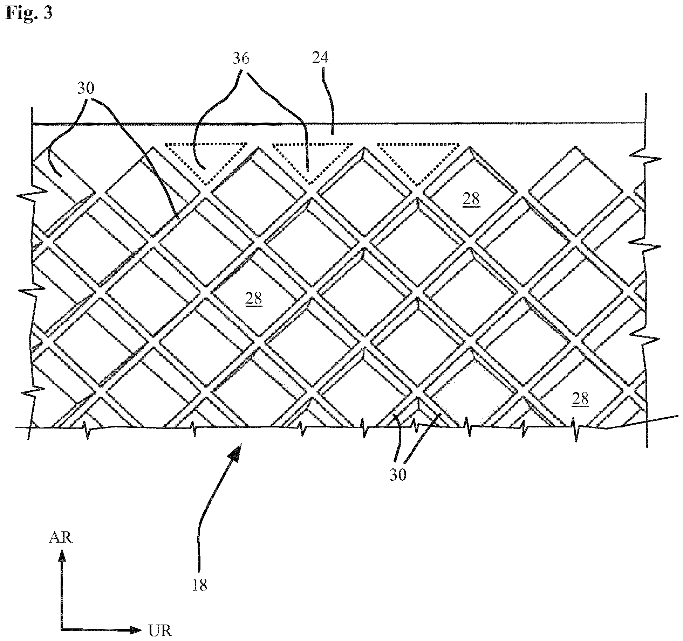

Wie aus den Figuren 2 und 3 ersichtlich, weist der Dichtungskörper 18 (bzw. beide Dichtungskörper) mehrere nebeneinander angeordnete Hohlräume 28 auf. Die Hohlräume 28 sind durch Streben 30 begrenzt, die auch als Begrenzungswandungen bezeichnet werden können. Bevorzugt kreuzen sich die Streben 30, so dass ein rautenartiges Muster gebildet wird und jeder Hohlraum 28 die Form eines rautenförmigen Zylinders aufweist, dessen Zylinderachse sich im Wesentlichen in der Radialrichtung RR erstreckt. Bevorzugt kreuzen sich die Streben 30 unter einem Winkel von 90°, so dass die Hohlräume einem Zylinder mit quadratischer Grundfläche entsprechen. Die Streben 30 sind zur Axialrichtung AR bevorzugt um 45° geneigt. In der Draufsicht von radial Innen (Fig. 3) ergibt sich somit eine maschenartige, insbesondere regelmäßige Anordnung der Streben 30 und Hohlräume 28, aus denen der Dichtungskörper 18 aufgebaut ist.

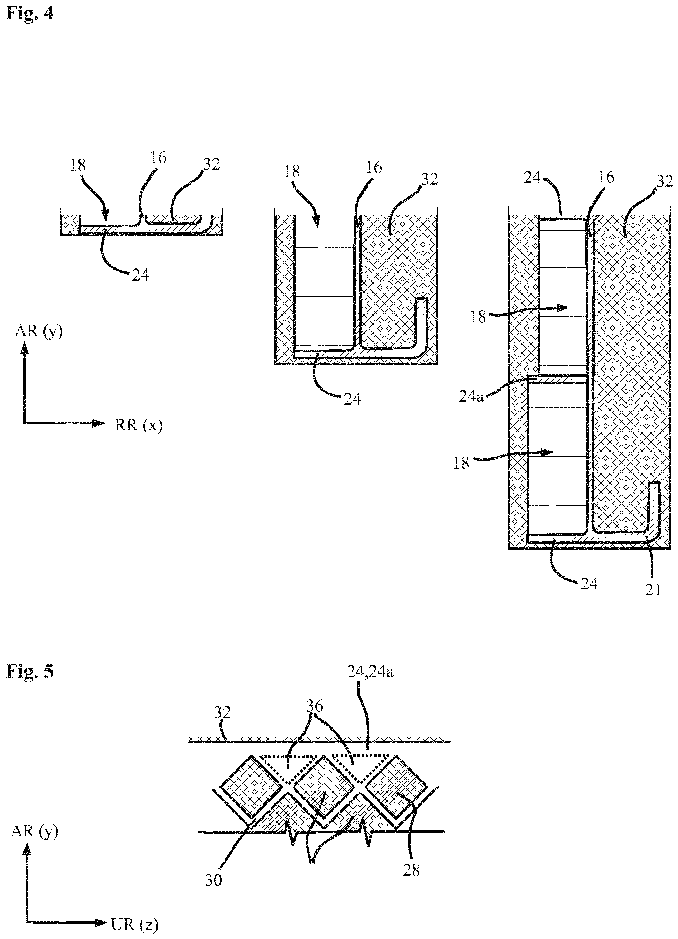

Der Dichtungsträger 10 mit der Trägerbasis 16, dem bzw. den Dichtungskörper(n) 18 und den Versteifungselementen 24, 24a ist instückig bzw. integral ausgebildet. Der Dichtungsträger 10 ist mittels eines additiven Verfahren hergestellt, etwa durch selektives Laserschmelzen (SLM). Das Herstellen eines Dichtungsträgers 10 mittels selektivem Laserschmelzen ist vereinfacht und schematisch in der Fig. 4 dargestellt. Bezogen auf eine bestimmungsgemäße Nutzung bzw. einen bestimmungsgemäßen Einbau in einer Turbomaschine bzw. Gasturbine, wird der Dichtungsträger in Axialrichtung AR, die in der Figur 4 auch als y-Richtung bezeichnet ist, schichtweise aufgebaut. Durch das schichtweise Verschmelzen von metallischem oder/und keramischem Pulver 32 wird der Dichtungsträger 10 aufgebaut. Dabei wird der entstehende Dichtungsträger 10 und nicht verschmolzenes Pulver 32 in einem in Figur 4 nur angedeuteten Prozessraum 34 in y-Richtung (Axialrichtung AR) immer weiter abgesenkt, bis der fertige Dichtungsträger 10 hergestellt ist. Danach wird der fertige, mittels selektivem Laserschmelzen hergestellte Dichtungsträger, an dem auch die Dichtungskörper 18 und die Versteifungselemente 24, 24a integral ausgebildet sind, aus dem Prozessraum 34 entnommen und von Pulverrückständen gereinigt.

Die Streben 30, welche die Hohlräume 28 des Dichtungskörpers 18 begrenzen, sind zur Schichtenebene, die parallel zur Radialrichtung RR bzw x-Richtung und orthogonal zur Axialrichtung bzw. y-Richtung liegt, um bevorzugt 45° geneigt. Dabei stellt der Winkel von 45° eine bevorzugt Größe dar, die insbesondere das Herstellen von sich kreuzenden Streben 30 mittels des selektiven Laserschmelzens ermöglicht. Der Winkel zwischen der Schichtebene und einer Strebe könnte auch größer als 45° sein, beispielsweise bis etwa 80°, so dass sich die Streben unter einem größeren Winkel schneiden (bis etwa 160° statt 90°), wobei die Hohlräume dann nicht mehr eine quadratische Grundfläche aufweisen, sondern eine Raute bzw. einen Rhombus mit Winkeln, die nicht 90° betragen. Der geneigte Aufbau der Streben 30 ist bevorzugt, weil es beim selektiven Laserschmelzen schwierig ist, parallel zur Schichtenebene verlaufende Überhänge herzustellen, die beispielsweise zwei orthogonal zur Schichtenebene aufgebaute Streben verbinden würden.

Aus der Fig. 5 ist der in Axialrichtung bzw. y-Richtung beim Herstellen oberste Teil des Dichtungsträgers 10 (bzw. Dichtungskörpers 18) vereinfacht und schematisch dargestellt.

Ersichtlich sind die obersten Streben 30 sowie mit verschmolzenem Material wenigstens teilweise aufgefüllte halbe Hohlräume 36 (gestrichelt umrandet, hier beispielhaft dreickesförmig), die mit dem anschließenden (obersten) Versteifungselement 24 verbunden sind. Diese halben Hohlräume 36 müssen mit verschmolzenem Material (nur als weiße Fläche dargestellt) aufgefüllt werden, damit das parallel zur Schichtenebene liegende Versteifungselement 24 einstückig mit dem Rest des Dichtungsträgers verbunden werden kann. In analoger Weise trifft das hier Gesagte für das in y-Richtung (Axialrichtung AR) oberste Versteifungselement 24 auch für das mittlere Versteifungselement 24a zu, bei dem ebenfalls (teilweise) gefüllte halbe Hohlräume 36 vorhanden sind. Die mit verschmolzenem Material gefüllten halben Hohlräume 36 sind auch in der Fig. 2 beim mittleren Versteifungselement 24a und dem in der Figur 2 linken Versteifungselement 24 ersichtlich.

Verfahrensmäßig kann die in den Fig. 4 und 5 dargestellte Herstellung auch wie folgt beschrieben werden. Es erfolgt zunächst ein schichtweises Aufbauen eines ersten, unteren Versteifungselements 24. Es werden miteinander verbundene, insbesondere sich kreuzenden Streben 30 zur Bildung des Dichtungskörpers 18 mit Hohlräumen 28 schichtweise aufgebaut. Es folgt ein schichtweises Aufbauen von wenigstens teilweise gefüllten Hohlräumen 32, etwa bei dem Versteifungselement 24a, oder/und dem obersten Versteifungselement 24. Schließlich wird eine zweites Versteifungselement 24, 24a schichtweise aufgebaut, das sich an die wenigstens teilweise gefüllten Hohlräume 32 anschließt. Dabei wird bei jedem schichtweisen Aufbauschritt auch die Trägerbasis 16 schichtweise aufgebaut und der Schichtaufbau erfolgt bezogen auf einen bestimmungsgemäß verwendeten Dichtungsträger 10 in Axialrichtung AR (y-Richtung).

Prinzipiell können einzelne Ringsegmente des Dichtungsträgers 10, die zusammen einen Vollkreis ergeben auf diese Weise hergestellt werden. Bevorzugt wird jedoch, wenn der gesamte Vollring integral einstückig durch das zuvor beschriebene Verfahren ausgebildet wird. Auf diese Weise spart man sich beim Einbau Montageaufwand und erzielt zudem eine höherer Dichtigkeit, da keine Trennspalten zwischen einzelnen Ringsegmenten vorhanden sind.

Der hier vorgestellte Dichtungsträger 10 weist wenigstens einen Dichtungskörper 18 auf mit auf das bevorzugte Fertigungsverfahren (SLM) optimierter Hohlraumform (Rauten). Das Bereitstellen des Dichtungsträgers 10 mit integralen Versteifungselementen 24, 24a ist optimal durch das gewählte Herstellungsverfahren ermöglicht. Die Form der Hohlräume 28 ist hinsichtlich der Minimierung von Stegen bzw. Streben 30 in Umfangsrichtung UR optimiert, so dass im Einlaufbereich der Dichtungsvorsprünge 14 (Dichtfins) eine Reduktion von Materialabtrag erreicht werden kann

Das hier vorgestellte Herstellungsverfahren ist kostengünstiger als bisher bekannte Verfahren, bei denen Dichtungskörper auf die Trägerbasis gelötet werden. Der Dichtungsträger 10 weist eine deutlich höhere Steifigkeit in Umfangsrichtungsrichtung auf. Dies ermöglicht die Spaltreduzierung (Laufspalt 20) zwischen Dichtungskörper 18 und Dichtungsvorsprung 14 (Dichtfin), was eine Steigerung des Wirkungsgrades einer Turbomaschine bzw. Gasturbine ermöglicht. Aufgrund des geringeren Materialabtrags im Betrieb der Turbomaschine bzw. der Gasturbine an den Dichtungsvorsprüngen 14 (Dichtfins) der Rotorkomponente 12 wird eine verbesserte Beibehaltung der Dimensionen des Laufspalts 20 erreicht, so dass der Wirkungsgradverlust über die Lebensdauer des Dichtungsträgers 10 reduziert wird.

### Bezugszeichenliste

- 10: Dichtungsträger
- 12: Rotorkomponente
- 14: Dichtungsvorsprung
- 16: Trägerbasis
- 18: Dichtungskörper
- 20: Laufspalt
- 22: axialer Endabschnitt der Trägerbasis
- 24: Versteifungselement
- 24a: Versteifungselement
- 26: axialer Endbereich des Dichtungskörpers
- 28: Hohlraum
- 30: Strebe
- 32: Pulver
- 34: Prozessraum
- 36: gefüllter Hohlraum

## Patentansprüche

1. Dichtungsträger (10) für eine Turbomaschine, insbesondere eine Gasturbine, umfassend
eine Trägerbasis (16) und wenigstens einen Dichtungskörper (18), wobei der wenigstens eine Dichtungskörper (18) mit der Trägerbasis (16) verbunden ist und wobei der wenigstens eine Dichtungskörper (18) durch mehrere in Umfangsrichtung (UR) und in Axialrichtung (AR) nebeneinander, insbesondere regelmäßig angeordnete Hohlräume (28) gebildet ist, wobei sich die Hohlräume (28) von der Trägerbasis (16) aus in radialer Richtung (RR) erstrecken,
wobei an der Trägerbasis (16) wenigstens ein entlang der Umfangsrichtung (UR) verlaufendes Versteifungselement (24, 24a) vorgesehen ist, das den wenigstens einen Dichtungskörper (18) an einem seiner axialen Endbereiche (26) wenigstens teilweise abdeckt, wobei die Trägerbasis (16), der wenigstens eine Dichtungskörper (18) und das wenigstens eine Versteifungselement (24, 24a) durch ein additives Fertigungsverfahren hergestellt und einstückig ausgebildet sind.

2. Dichtungsträger nach Anspruch 1, **dadurch gekennzeichnet, dass** an der Trägerbasis (16) an ihren beiden axialen Endabschnitten (22) jeweils ein Versteifungselement (24) vorgesehen ist, derart dass der wenigstens eine Dichtungskörper (18) in Axialrichtung (AR) zwischen den beiden Versteifungselementen (24) aufgenommen ist.

3. Dichtungsträger nach Anspruch 1 oder 2, **dadurch gekennzeichnet, dass** die Hohlräume (28) des wenigstens einen Dichtungskörpers (18) durch untereinander verbundene Streben (30) gebildet sind, wobei die Streben (30) derart angeordnet sind, dass die Hohlräume (28) in einer Draufsicht in Radialrichtung (RR) eine vieleckige Form aufweisen, insbesondere rautenförmig ausgebildet sind.

4. Dichtungsträger nach einem der vorhergehenden Ansprüche, **dadurch gekennzeichnet, dass** an der Trägerbasis (16) zwei Dichtungskörper (18) angeordnet sind, die in Axialrichtung (AR) nebeneinander angeordnet sind, wobei jeder Dichtungskörper (18) an seinem vom benachbarten Dichtungskörper (18) abgewandten axialen Endbereich (26) durch ein jeweiliges Versteifungselement (24) abgedeckt ist.

5. Dichtungsträger nach Anspruch 4, **dadurch gekennzeichnet, dass** zwischen den beiden Dichtungskörpern (18) ein weiteres Versteifungselement (24a) vorgesehen ist, derart dass jeder Dichtungskörper (18) zwischen dem weiteren Versteifungselement (24a) und dem jeweiligen Versteifungselement (24), das den axialen Endabschnitt (26) abdeckt, aufgenommen ist.

6. Dichtungsträger nach einem der vorhergehenden Ansprüche, **dadurch gekennzeichnet, dass** die Trägerbasis (16), der wenigstens eine Dichtungskörper (18) und das wenigstens eine Versteifungselement (24, 24a) durch selektives Laserschmelzen hergestellt sind.

7. Dichtungsträger nach einem der vorhergehenden Ansprüche, **dadurch gekennzeichnet, dass** die Trägerbasis (16), der wenigstens eine Dichtungskörper (18) und das wenigstens eine Versteifungselement (24, 24a) schichtweise aufgebaut sind, wobei die Schichten in Axialrichtung (AR) nebeneinander liegen.

8. Dichtungsträger nach Anspruch 6 oder 7, **dadurch gekennzeichnet, dass** die in Axialrichtung äußersten Hohlräume (32) des Dichtungskörpers (18) wenigstens teilweise gefüllt sind, derart, dass das in Axialrichtung (AR) anschließende, den Dichtungskörper (18) abdeckende Versteifungselement (24, 24a) mit den wenigstens teilweise gefüllten Hohlräumen (32) verbunden ist.

9. Dichtungsträger nach einem der vorhergehenden Ansprüche, **dadurch gekennzeichnet, dass** er eine geschlossene Ringform aufweist oder als Ringsektor ausgeführt ist.

10. Dichtungsträger nach einem der vorhergehenden Ansprüche, **dadurch gekennzeichnet, dass** an der Trägerbasis (16) auf deren von dem wenigstens einen Dichtungskörper abgewandten Seite eine Haltestruktur ausgebildet ist, die dazu eingerichtet ist, den Dichtungsträger mit einem anderen Bauteil einer Turbomaschine, insbesondere Gasturbine, zu verbinden.

11. Gasturbine, insbesondere Fluggasturbine, mit wenigstens einem Dichtungsträger (10) nach einem der vorhergehenden Ansprüche, wobei der wenigstens eine Dichtungsträger (10) einem Leitschaufelkranz zugeordnet ist und wobei der wenigstens eine Dichtungskörper (18) radial innen einem drehenden Rotorbauteil (12), insbesondere einer Welle oder Scheibe eines Laufschaufelkranzes, und daran ausgebildeten Dichtvorsprüngen (14) zugewandt ist.

12. Additives Verfahren, insbesondere selektives Laserschmelzverfahren, zur Herstellung eines Dichtungsträgers (10) nach einem der Ansprüche 1 bis 10, umfassend die Schritte:
Schichtweises Aufbauen eines ersten Versteifungselements (24);
Schichtweises Aufbauen von miteinander verbundenen, insbesondere sich kreuzenden Streben (30) zur Bildung des Dichtungskörpers (18) mit Hohlräumen (28);
Schichtweises Aufbauen von wenigstens teilweise gefüllten Hohlräumen (32);
Schichtweises Aufbauen eines zweiten Versteifungselements (24, 24a), das sich an die wenigstens teilweise gefüllten Hohlräume (32) anschließt;
wobei bei jedem schichtweisen Aufbauschritt auch die Trägerbasis (16) schichtweise aufgebaut wird und wobei der Schichtaufbau bezogen auf einen bestimmungsgemäß verwendeten Dichtungsträger in Axialrichtung (AR, y) erfolgt, so dass die Trägerbasis (16), der wenigstens eine Dichtungskörper (18) und die Versteifungselemente (24, 24a) einstückig ausgebildet werden.

13. Verfahren nach Anspruch 12, ferner umfassend den Schritt, dass die Streben (30) derart schichtweise aufgebaut werden, dass sie sich unter einem Winkel von etwa 90° schneiden bzw. mit der Ebene des Schichtaufbaus einen Winkel von etwa 45° bilden.

14. Verfahren nach Anspruch 12 oder 13, ferner umfassend den Schritt, dass bei jedem schichtweisen Aufbauschritt auch eine mit der Trägerbasis (16) verbundene Haltestruktur schichtweise aufgebaut wird.

## Claims

1. Seal carrier (10) for a turbomachine, in particular a gas turbine, comprising a carrier base (16) and at least one sealing body (18), wherein the at least one sealing body (18) is connected to the carrier base (16) and the at least one sealing body (18) is formed by a plurality of cavities (28) arranged next to one another in the circumferential direction (UR) and in the axial direction (AR), in particular regularly, wherein the cavities (28) extend from the carrier base (16) in the radial direction (RR), wherein at least one stiffening element (24, 24a) which extends along the circumferential direction (UR) is provided on the carrier base (16), which stiffening element at least partially covers the at least one sealing body (18) at one of the axial end regions (26) thereof, wherein the carrier base (16), the at least one sealing body (18) and the at least one stiffening element (24, 24a) are produced by an additive manufacturing method and are formed in one piece.

2. Seal carrier according to claim 1, **characterized in that** a stiffening element (24) is provided on each of the two axial end portions (22) of the carrier base (16), such that the at least one sealing body (18) is received in the axial direction (AR) between the two stiffening elements (24).

3. Seal carrier according to eitherclaim 1 or claim 2, **characterized in that** the cavities (28) of the at least one sealing body (18) are formed by interconnected struts (30), the struts (30) being arranged such that the cavities (28) have a polygonal shape, in particular are diamond-shaped, in a plan view in the radial direction (RR).

4. Seal carrier according to any of the preceding claims, **characterized in that** two sealing bodies (18) are arranged on the carrier base (16), which are arranged next to one another in the axial direction (AR), each sealing body (18) being covered by a relevant stiffening element (24) on the axial end region (26) thereof that faces away from the adjacent sealing body (18).

5. Seal carrier according to claim 4, **characterized in that** a further stiffening element (24a) is provided between the two sealing bodies (18), such that each sealing body (18) is received between the further stiffening element (24a) and the relevant stiffening element (24) which covers the axial end portion (26).

6. Seal carrier according to any of the preceding claims, **characterized in that** the carrier base (16), the at least one sealing body (18) and the at least one stiffening element (24, 24a) are produced by selective laser melting.

7. Seal carrier according to any of the preceding claims, **characterized in that** the carrier base (16), the at least one sealing body (18) and the at least one stiffening element (24, 24a) are constructed in layers, the layers being next to one another in the axial direction (AR).

8. Seal carrier according to eitherclaim 6 or claim 7, **characterized in that** the cavities (32) of the sealing body (18) that are outermost in the axial direction are at least partially filled, such that the stiffening element (24) adjoining in the axial direction (AR) that covers the sealing body (18), 24a) is connected to the at least partially filled cavities (32).

9. Seal carrier according to any of the preceding claims, **characterized in that** said seal carrier has a closed annular shape or is designed as an annular sector.

10. Seal carrier according to any of the preceding claims, **characterized in that** a retaining structure is formed on the carrier base (16) on the side thereof facing away from the at least one sealing body, which retaining structure is designed to connect the seal carrierto another component of a turbomachine, in particular a gas turbine.

11. Gas turbine, in particular an aircraft gas turbine, comprising at least one seal carrier(10) according to any of the preceding claims, wherein the at least one seal carrier (10) is assigned to a guide vane ring and wherein the at least one sealing body (18), radially on the inside, faces a rotating rotor component (12), in particulara shaft or disc of a rotor blade ring, and sealing projections (14) formed thereon.

12. Additive method, in particular a selective laser melting method, for producing a seal carrier (10) according to any of claims 1 to 10, comprising the steps of:
constructing a first stiffening element (24) in layers;
constructing interconnected, in particular intersecting, struts (30) in layers, in order to form the sealing body (18) having cavities (28);
constructing at least partially filled cavities (32) in layers;
constructing a second stiffening element (24, 24a) in layers, which second stiffening element adjoins the at least partially filled cavities (32);
wherein the carrier base (16) is also built up in layers in each layered construction step, and the layered construction takes place in the axial direction (AR, y), based on a seal carrier used as intended, so that the carrier base (16), the at least one sealing body (18) and the stiffening elements (24, 24a) are formed in one piece.

13. Method according to claim 12, further comprising the step of constructing the struts (30) in layers such that they intersect at an angle of approximately 90° or form an angle of approximately 45° with the plane of the layer structure.

14. Method according to either claim 12 or claim 13, further comprising the step of also constructing, in layers, a holding structure connected to the carrier base (16) in each layered construction step.

## Revendications

1. Support de joint d'étanchéité (10) destiné à une turbomachine, en particulier à une turbine à gaz, comprenant
une base de support (16) et au moins un corps d'étanchéité (18), l'au moins un corps d'étanchéité (18) étant relié à la base de support (16) et l'au moins un corps d'étanchéité (18) étant formé de plusieurs cavités (28) disposées côte à côte dans la direction circonférentielle (UR) et dans la direction axiale (AR), en particulier de façon régulière, les cavités (28) s'étendant depuis la base de support (16) dans la direction radiale (RR),
au moins un élément de renforcement (24, 24a) qui s'étend le long de la direction circonférentielle (UR) étant prévu sur la base de support (16), lequel élément de renforcement recouvre au moins partiellement l'au moins un corps d'étanchéité (18) au niveau de l'une de ses zones d'extrémité axiales (26),
la base de support (16), l'au moins un corps d'étanchéité (18) et l'au moins un élément de renforcement (24, 24a) étant produits par un procédé de fabrication additive et étant réalisés d'une seule pièce.

2. Support de joint d'étanchéité selon la revendication 1, **caractérisé en ce qu'**un élément de renforcement (24) est respectivement prévu sur les deux sections d'extrémité axiales (22) de la base de support (16), de telle sorte que l'au moins un corps d'étanchéité (18) est logé entre les deux éléments de renforcement (24) dans la direction axiale (AR).

3. Support de joint d'étanchéité selon la revendication 1 ou 2, **caractérisé en ce que** les cavités (28) de l'au moins un corps d'étanchéité (18) sont formées par des entretoises (30) reliées entre elles, les entretoises (30) étant disposées de telle sorte que les cavités (28) présentent, lorsqu'elles sont vues d'en haut dans la direction radiale (RR), une forme polygonale, en particulier de losange.

4. Support de joint d'étanchéité selon l'une des revendications précédentes, ca ractérisé en ce que deux corps d'étanchéité (18), qui sont disposés l'un à côté de l'autre dans la direction axiale (AR), sont disposés sur la base de support (16), chaque corps d'étanchéité (18) étant recouvert par un élément de renforcement respectif (24) au niveau de sa zone d'extrémité axiale (26) opposée au corps d'étanchéité voisin (18).

5. Support de joint d'étanchéité selon la revendication 4, **caractérisé en ce qu'**un élément de renforcement supplémentaire (24a) est prévu entre les deux corps d'étanchéité (18), de telle sorte que chaque corps d'étanchéité (18) est reçu entre l'élément de renforcement supplémentaire (24a) et l'élément de renforcement respectif (24) qui recouvre la zone d'extrémité axiale (26).

6. Support de joint d'étanchéité selon l'une des revendications précédentes, **caractérisé en ce que** la base de support (16), l'au moins un corps d'étanchéité (18) et l'au moins un élément de renforcement (24, 24a) sont produits parfusion sélective au laser.

7. Support de joint d'étanchéité selon l'une des revendications précédentes, **caractérisé en ce que** la base de support (16), l'au moins un corps d'étanchéité (18) et l'au moins un élément de renforcement (24, 24a) sont construits par couches, les couches étant juxtaposées dans la direction axiale (AR).

8. Support de joint d'étanchéité selon la revendication 6 ou 7, **caractérisé en ce que** les cavités (32) du corps d'étanchéité (18) qui sont les plus à l'extérieur dans la direction axiale sont au moins partiellement remplies, de telle sorte que l'élément de renforcement (24, 24a) qui est adjacent dans la direction axiale (AR) et qui recouvre le corps d'étanchéité (18) est relié aux cavités au moins partiellement remplies (32).

9. Support de joint d'étanchéité selon l'une des revendications précédentes, **caractérisé en ce qu'**il présente une forme annulaire fermée ou est conçu sous la forme d'un secteur annulaire.

10. Support de joint d'étanchéité selon l'une des revendications précédentes, **caractérisé en ce qu'**une structure de maintien est réalisée sur le côté de la base de support (16) qui est opposé à l'au moins un corps d'étanchéité, laquelle structure de maintien est conçue pour relier le support de joint d'étanchéité à un autre composant d'une turbomachine, en particulier d'une turbine à gaz.

11. Turbine à gaz, en particulier turbine à gaz d'aéronef,
comportant au moins un support de joint d'étanchéité (10) selon l'une des revendications précédentes,
l'au moins un support de joint d'étanchéité (10) étant associé à une couronne d'aubes directrices, et
l'au moins un corps d'étanchéité (18) faisant face radialement vers l'intérieur à un composant de rotor rotatif (12), en particulier à un arbre ou disque d'une couronne d'aubes mobiles, et à des saillies d'étanchéité (14) réalisées sur celui-ci.

12. Procédé additif, en particulier procédé de fusion sélective au laser, permettant de produire un support de joint d'étanchéité (10) selon l'une des revendications 1 à 10, comprenant les étapes :
de construction par couches d'un premier élément de renforcement (24) ;
de construction par couches d'entretoises (30) reliées entre elles, en particulier croisées, pour former le corps d'étanchéité (18) comportant des cavités (28) ;
de construction par couches de cavités (32) au moins partiellement remplies ;
de construction par couches d'un second élément de renforcement (24, 24a), lequel est adjacent aux cavités (32) au moins partiellement remplies ;
à chaque étape de construction par couches, la base de support (16) étant également construite par couches et la construction par couches étant effectuée dans la direction axiale (AR, y) par rapport à un support de joint d'étanchéité utilisé comme prévu, de telle sorte que la base de support (16), l'au moins un corps d'étanchéité (18) et les éléments de renforcement (24, 24a) sont réalisés d'une seule pièce.

13. Procédé selon la revendication 12, comprenant en outre l'étape selon laquelle les entretoises (30) sont construites par couches de telle manière qu'elles se coupent à un angle d'environ 90° ou forment un angle d'environ 45° avec le plan de la construction par couches.

14. Procédé selon la revendication 12 ou 13, comprenant en outre l'étape selon laquelle, à chaque étape de construction par couches, une structure de maintien reliée à la base de support (16) est également construite parcouches.
